# EUROPÄISCHE PATENTANMELDUNG

(11) **EP 0 849 611 A2**
(43) Veröffentlichungstag der Anmeldung: **24.06.1998**
(21) Anmeldenummer: 97118406.4
(22) Anmeldetag: 23.10.1997
(51) Int. Cl.: G01V 3/15, G02B 27/01

(54) **Ortungseinrichtung für im Erdbereich befindliche Objekte**

(30) Priorität: 19.12.1996 DE 19652977
(71) Anmelder: Vallon GmbH, D-72800 Eningen (DE)
(72) Erfinder: Vallon, Gerhard, 72800 Eningen u. A. (DE)
(74) Vertreter: Klocke, Peter, Dipl.-Ing.

(57) **Zusammenfassung**

Ortungseinrichtung für im Erdbereich befindliche Objekte mit Detektoren zur Erzeugung eines Meßsignals, eine mit den Detektoren in Verbindung stehenden Auswerteeinheit und eine Anzeigeeinrichtung, wobei die Anzeigeeinrichtung ein Minidisplay (4) mit einer davor angeordneten Linse (5) umfaßt, das mittels einer Kopfhalterung (1) vor dem Auge einer Bedienungsperson (6) befestigbar ist. Auf dem Minidisplay werden sowohl die Meßdaten und/oder entstehenden Meßkurven als auch Richtungshinweise für die Orientierung der Bedienungsperson entlang der Meßstrecke abgebildet.

## Beschreibung

Die vorliegende Erfindung betrifft eine Ortungseinrichtung für im Erdbereich befindliche Objekte mit Detektoren zur Erzeugung eines Meßsignals, eine mit den Detektoren in Verbindung stehenden Auswerteeinrichtung und einer Anzeigeeinrichtung.

Bei der Ortung von im Erdbereich befindlichen Objekten geht der Sondengänger den zu untersuchenden Bereich entlang einer vorgegebenen Strecke ab. Die Festlegung der Meßstrecke kann dabei entsprechend der DE 43 33 121 C2 erfolgen. Eine weitere bekannte Möglichkeit der Streckenfestlegung und Überwachung ergibt sich durch die Verwendung des von Satelliten abgestrahlten GPS (Global Positioning System).

Aus der DE 295 16 731 ist eine Anzeigevorrichtung für Metallsuchgerät bekannt, die eine an dem Kopf des Benutzers des Suchgeräts anbringbare Halterung und einen mit dieser verbundenen Träger für eine optische Anzeige, beispielsweise Leuchtdiode, enthält, wobei der Träger derart angeordnet ist, daß die optische Anzeige mindestens im Rand des Blickfeldes des Benutzers des Suchgerätes liegt. Zusätzlich weist die Anzeigevorrichtung gleichzeitig auch eine übliche akustische Anzeige auf. Eine derartige akustische Anzeige ist auch aus der DE-OS 16 23 110 bekannt.

Der vorliegenden Erfindung liegt die Aufgabe zugrunde, eine Vorrichtung vorzuschlagen, die der die Meßstrecke ablaufenden Person eine genauere Orientierungsmöglichkeit entlang der Meßstrecke beim gleichzeitigem Erkennen der Meßdaten ermöglicht.

Die Lösung dieser Aufgabe erhält man durch die im Anspruch 1 angegebenen Merkmale. Weitere vorteilhafte Ausgestaltungen sind den Unteransprüchen zu entnehmen.

Die erfindungsgemäß ausgestaltete Einrichtung umfaßt einen Miniatur-Bildschirm (Minidisplay) mit einer davor angeordneten Linse, das mittels einer Kopfhalterung vor dem Auge einer Bedienungsperson befestigbar ist. Das Minidisplay ist ein handelsübliches Display mit einer ungefähren Fläche von 5 cm². Das Minidisplay ist zusammen mit einer Linse vor einem Auge der Bedienungsperson angeordnet, so daß vor dem einen Auge der Bedienungsperson eine wesentlich vergrößerte Anzeigefläche erscheint, auf der sie sämtliche Meßdaten und/oder entstehende Meßkurven erkennen kann. Die Befestigung der Anzeigeeinrichtung erfolgt beispielsweise mittels eines üblichen Kopfbandes. Die Verbindung der Anzeigeeinrichtung mit der Auswerteeinrichtung kann entweder über Kabel oder über Antennen erfolgen.

Gemäß einer bevorzugten Ausführungsform ist zusätzlich an der Kopfhalterung eine akustische Anzeigeeinrichtung, beispielsweise Kopfhörer, vorgesehen. Damit kann die Auswerteeinrichtung ein akustisches Signal ausgeben, wenn die Bedienungsperson vom Weg abgewichen ist. Vorzugsweise werden Richtungshinweise in Form von Pulsen oder Worten ausgegeben. Mit einem zusätzlichen Mikrophon an der Kopfhalterung gemäß einer weiteren Ausbildung, ist auch eine Kommunikation mit dem Leitstand möglich.

Gemäß einer vorteilhaften Ausgestaltung ist auf dem Display ein im wesentlichen quadratisches Streckenfenster angeordnet, auf dem Meßdaten in Abhängigkeit des zurückgelegten Weges und/oder der zurückgelegte Weg darstellbar sind. Seitlich davon befindet sich ein Navigationsfenster auf dem mittels Symbolen die Abweichung vom Suchpfad sowie in einem dazugehörenden Navigationswertefenster die zahlenmäßige Angaben über GPS-Daten, Abweichung und dgl. darstellbar sind. In diesem seitlichen Bereich befinden sich außerdem je nach der Anzeige im Streckenfenster noch Angaben beispielsweise über die abgesuchte Spur sowie per Mausklick betätigbare Tasten. Durch diese Anordnung ist die Bedienperson jederzeit über den augenblicklichen Suchvorgang auf übersichtliche Art und Weise informiert.

Bei Abweichung von einem vorgegebenen Pfad kann gemäß einer weiteren Ausbildung die Auswerteeinrichtung Richtungshinweise auf dem Display, beispielsweise durch Pfeile, abbilden. Im Zusammenhang mit der akustischen Anzeigeeinrichtung können gleichzeitig noch akustische Hinweise von der Auswerteeinrichtung ausgegeben werden.

Gemäß einer weiteren bevorzugten Ausführungsform ist auf dem Display die abgelaufenen Spur der Bedienperson zeitgleich (Echtzeit) sichtbar, so daß diese sofort die abgelaufenen Strecke überprüfen und korrigieren kann. Des weiteren sind die Größen der Objekte gleichzeitig und zeitgleich abbildbar. Durch Einblenden der Objekte im Untergrund kann ein durch die Auswerteeinheit errechnetes virtuelles Bild des Untergrundes auf dem Minidisplay sichtbar gemacht werden. Abhängig von der verwendeten Sonde wird eine µ-, ε- bzw. σ-Landschaft (Dichtefunktion) dargestellt, wobei µ bei ferromagnetischen Objekten, ε bei Plastik und σ bei NE-Metallen aufgrund der verschiedenen Meßsonden (Magnetometer, E-Feld-Sonde, Pulsgerät) zum tragen kommt.

In einer anderen bevorzugten Ausführungsform werden die ermittelten Werte direkt nach Abschreiten einer Spur, beispielsweise bei Richtungsumkehr nach Abschreiten einer Spur eines Suchfeldes, dargestellt.

Vorzugsweise ist die Anzeigeeinrichtung als LCD-Minidisplay und die Auswerteeinrichtung als mobiles Datenverarbeitungsgerät, beispielsweise Laptop, ausgebildet. Letzteres ermöglicht die flexible Handhabung an Ort und Stelle.

Nachfolgend wird die Erfindung anhand eines Ausführungsbeispiels in Verbindung mit den begleitenden Zeichnungen näher erläutert. Es stellen dar:
- Figur 1: die schematische Seitenansicht einer Kopfhalterung mit optischer und akustischer Anzeigeeinrichtung,
- Figur 2: die schematische Darstellung der Bedienperson mit der Ortungseinrichtung unter Verwendung einer GPS-Antenne,
- Figur 3: die Anzeige auf dem Minidisplay mit der abgeschrittenen Spur,
- Figur 4: die Anzeige auf dem Minidisplay mit Felddaten und der Abweichung vom Pfad sowie Angaben über die Position der Bedienperson, und
- Figur 5: die Anzeige der Magnetfeldstärke von Objekten in einem Suchfeld.

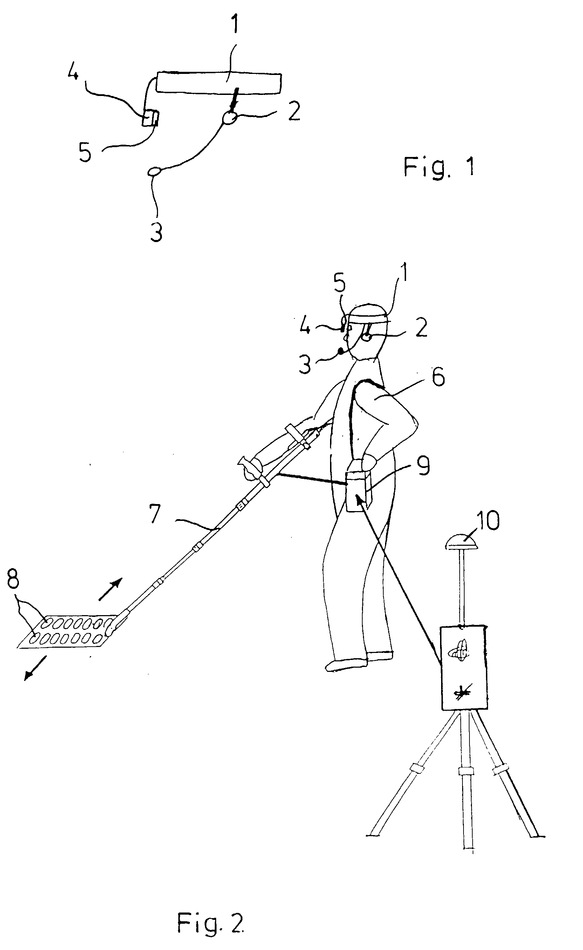

Figur 1 zeigt die Kopfhalterung 1 in Form eines üblichen bekannten und in der Abmessung einstellbaren Stirnbandes an der seitlich ein Kopfhörer 2 sowie ein Mikrophon 3 angebracht ist. Im vorderen Bereich der Kopfhalterung befindet sich ein LCD-Minidisplay 4 mit einer Vorsatzlinse 5, so daß die in Figur 2 dargestellte Bedienperson vor ihrem einen Auge eine vergrößerte Anzeigefläche sieht.

Figur 2 zeigt ein Ausführungsbeispiel bei der eine Bedienperson 6 ein Suchgerät 7, das mit mehreren Detektoren 8 ausgerüstet ist, betätigt. Die von dem Suchgerät aufgenommenen Daten werden zu einer Auswerteeinheit 9 und die darzustellenden Daten per Kabel oder Antenne von dieser zu dem Minidisplay 4 und/oder dem Kopfhörer 2 übertragen. Je nach Übertragungsart muß an der Kopfhalterung zusätzlich eine Antenne (nicht dargestellt) angebracht sein. Die Auswerteeinheit 9 kann auch ein Laptop sein. Im vorliegenden Ausführungsbeispiel erfolgt die Orientierung der Bedienungsperson mittels des GPS-Ortungssystems, wobei der eigentliche Referenzpunkt eine GPS-Antenne 10 bildet, die mit einem Satelliten in Funkverbindung steht. Dieses Verfahren ist in dem deutschen Patent 196 11 757 des Anmelders beschrieben. Die Orientierung der Bedienungsperson kann aber auch anhand auf dem Boden ausgelegten Markierungen erfolgen.

Auf dem LCD-Minidisplay werden sämtliche Meßdaten und/oder entstehenden Meßkurven abgebildet und zusätzlich über die Auswerteeinheit mittels Pfeilen Hinweise für die Orientierung gegeben. Gleichzeitig kann akustisch in Form von Worten oder Pulsen über die Kopfhörer 2 der Bedienungsperson 6 noch die Richtung, z. B. rechts, links, übermittelt werden.

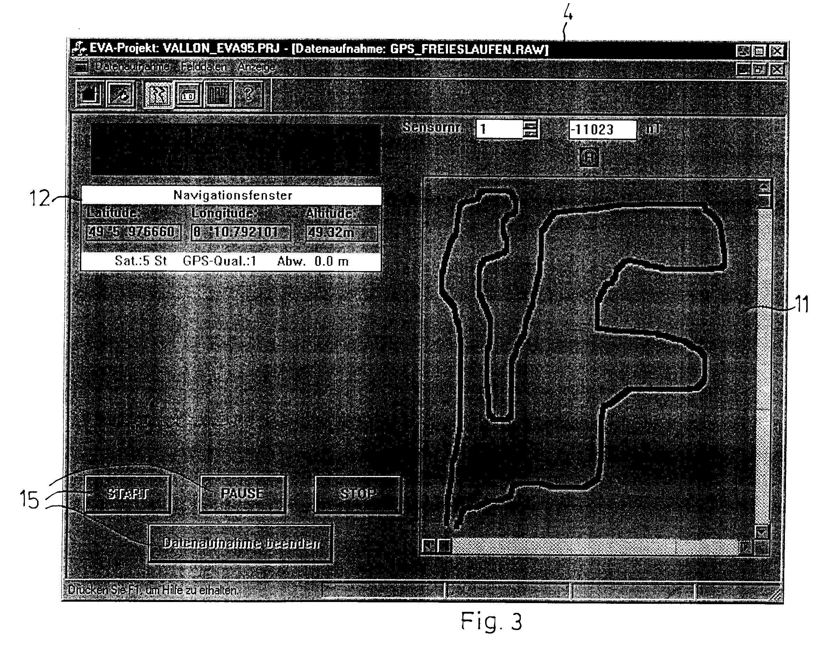

In der Figur 3 ist zur Veranschaulichung eines Ausführungsbeispiels das Bild eines Display ersichtlich, auf dem in einem rechten quadratischen Streckenfenster 11 der von der Bedienperson abgesuchte Weg in Echtzeit dargestellt ist. Dies erlaubt der Bedienperson sofort zu erkennen, welcher Weg zurückgelegt wurde und welche Stellen noch abgesucht werden müssen. Im Grunde ist das gesamte Suchfeld dann ausreichend abgesucht, wenn das gesamte Suchfeld vollständig ohne Zwischenräume mit Spuren belegt ist.

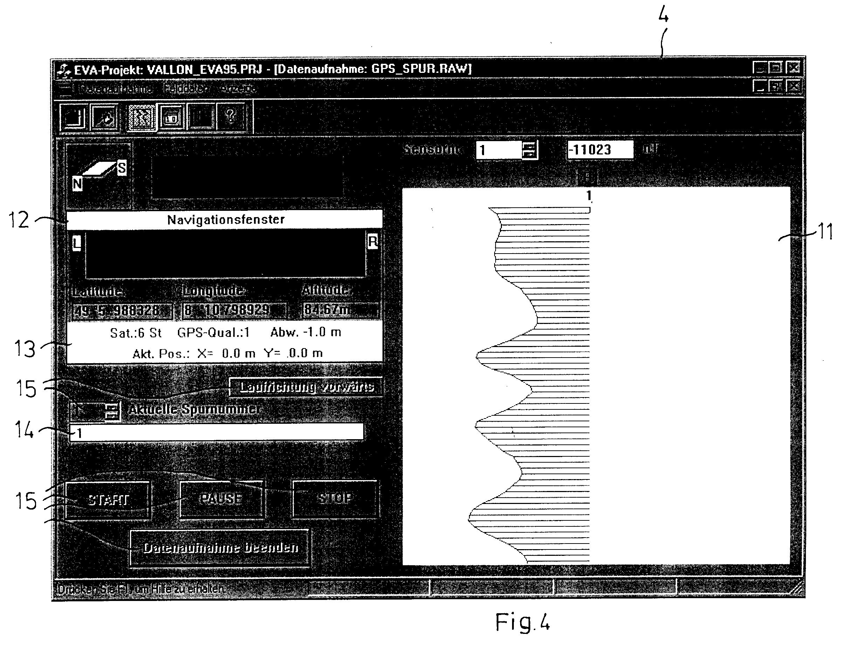

In einem anderen Ausführungsbeispiel gemäß Figur 4 zeigt das rechte Streckenfenster 11 den Verlauf der Magnetfeldstärke entlang des Weges. In dem links davon angeordneten Navigationsfenster 12 ist - möglichst farblich (hier nicht darstellbar) - die Abweichung vom Suchpfad sichtbar. Im vorliegenden Fall ist eine Abweichung nach links erfolgt, die im dazugehörenden darunter angeordneten Navigationswertefenster 13 in Meter mit -1.0 angegeben ist. Zusätzlich sind, wie bereits auch in Figur 3 gezeigt, die GPS-Daten im Navigationswertefenster 13 sichtbar.

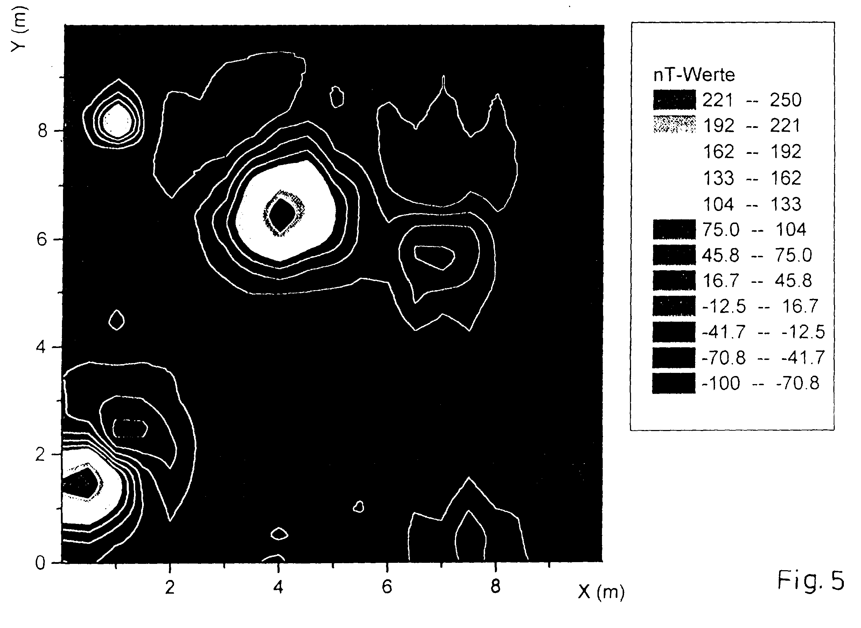

Figur 5 zeigt in einem Ausführungsbeispiel die gemessenen Magnetfeldstärken von in einem Suchfeld erkannten Objekten, wobei farbig die unterschiedlichen nT-Werte angezeigt werden. Gemäß der Erfindung sind bereits Teilbereiche des Suchfeldes direkt nach dem Absuchen auf dem Minidisplay sichtbar. Bei dem in Figur 5 dargestellten Suchfeld werden beispielsweise direkt nach dem Absuchen eines Streifens parallel zu der Y-Achse bei der Richtungsumkehr die für den abgesuchten Bereich gültigen nT-Werte dargestellt, um der Bedienperson bei dem Abschreiten gleich Hinweise über die Lage der Objekte und Entscheidungshilfen für die weitere Suche an die Hand zu geben.

## Patentansprüche

1. Ortungseinrichtung für im Erdbereich befindliche Objekte mit Detektoren zur Erzeugung eines Meßsignals, eine mit den Detektoren in Verbindung stehenden Auswerteeinrichtung und eine Anzeigeeinrichtung, **dadurch gekennzeichne**t, daß die Anzeigeeinrichtung einen Miniatur-Bildschirm (Minidisplay) (4) mit einer davor angeordneten Linse (5) umfaßt, das mittels einer Kopfhalterung (1) vor dem Auge einer Bedienungsperson (6) befestigbar ist.

2. Ortungseinrichtung nach Anspruch 1, **dadurch gekennzeichnet**, daß an der Kopfhalterung (1) eine akustische Anzeigeeinrichtung (2) angeordnet ist.

3. Ortungseinrichtung nach Anspruch 2, **dadurch gekennzeichnet,** daß die akustische Anzeigeeinrichtung (2) akustische Richtungshinweise in Form von Pulsen oder Worten abgibt.

4. Ortungseinrichtung nach einem der vorangegangenen Ansprüche, **dadurch gekennzeichnet**, daß an der Kopfhalterung (1) ein Mikrophon (3) für die Bedienungsperson (6) angeordnet ist.

5. Ortungseinrichtung nach einem der vorangegangenen Ansprüche, **dadurch gekennzeichnet**, daß auf dem Miniatur-Bildschirm (Minidisplay) (4) sämtliche Meßdaten und/oder entstehenden Meßkurven abbildbar sind.

6. Ortungseinrichtung nach Anspruch 5, **dadurch gekennzeichnet**, daß auf dem Miniatur-Bildschirm (Minidisplay) (4) ein im wesentlichen quadratisches Streckenfenster (11) zur Anzeige von Meßdaten in Abhängigkeit des zurückgelegten Weges und/oder des zurückgelegten Weges und seitlich davon ein rechteckförmiges Navigationsfenster (12), auf dem mittels Symbolen und Zahlenwerten die Abweichung vom Suchpfad sowie Angaben über GPS-Daten, abbildbar ist, angeordnet ist.

7. Ortungseinrichtung nach Anspruch 6, **dadurch gekennzeichnet**, daß auf dem Miniatur-Bildschirm (Minidisplay) (4) in dem Bereich seitlich des Streckenfensters (11) sich je nach der Anzeige im Streckenfenster noch Fenster (14) für zusätzliche Angaben sowie per Mausklick betätigbare Funktionstasten (15) angeordnet sind.

8. Ortungseinrichtung nach einem der vorangegangenen Ansprüche, **dadurch gekennzeichnet**, daß auf dem Miniatur-Bildschirm (Minidisplay) (4) bei Abweichung von einem vorgegebenen Pfad Richtungshinweise abbildbar sind.

9. Ortungseinrichtung nach einem der vorangegangenen Ansprüche, **dadurch gekennzeichnet,** daß auf dem Miniatur-Bildschirm (Minidisplay) (4) die abgelaufene Spur der Bedienperson und/oder die Größe des gefundenen Objekts abbildbar ist.

10. Ortungseinrichtung nach einem der vorangegangenen Ansprüche, **dadurch gekennzeichnet**, daß auf dem Miniatur-Bildschrim (Minidisplay) (4) die gemessenen Werte eines Suchfeldes abbildbar sind.

11. Ortungseinrichtung nach Anspruch 10, **dadurch gekennzeichnet**, daß die gemessenen Werte eines Teilbereichs des Suchfeldes bereits nach Abschreiten desselben abbildbar sind.

12. Ortungseinrichtung nach einem der vorangegangenen Ansprüche, **dadurch gekennzeichnet**, daß die Anzeigeeinrichtung als LCD-Minidisplay ausgebildet ist.

13. Ortungseinrichtung nach einem der vorangegangenen Ansprüche, **dadurch gekennzeichnet**, daß die Auswerteeinrichtung (9) als Laptop ausgebildet ist.
